# EUROPEAN PATENT APPLICATION

(11) **EP 3 882 778 A1**
(43) Date of publication of application: **22.09.2021**
(21) Application number: 18940351.2
(22) Date of filing: 14.11.2018
(51) Int. Cl.: G06F 13/00

(54) **INFORMATION PROCESSING METHOD, INFORMATION PROCESSING PROGRAM, INFORMATION PROCESSING DEVICE, AND INFORMATION PROCESSING SYSTEM**

(71) Applicant: CONNECTFREE CORPORATION, Kyoto-shi, Kyoto 600-8009 (JP)
(72) Inventor: TATE, Kristopher Andrew, Kyoto-shi, Kyoto 600-8009 (JP)
(74) Representative: Boult Wade Tennant LLP
(86) International application number: PCT/JP2018/042157
(87) International publication number: WO 2020/100235

(57) **Abstract**

This information processing method comprises: a step (S2) for generating a two-dimensional pattern associated with the network address of a first device (1); a step (S3) for causing a display unit of the first device (1) to display the two-dimensional pattern; a step (S5) for acquiring image data representing the two-dimensional pattern from a camera of a second device (2); and a step (S6) for identifying the network address of the first device (1) on the basis of the acquired image data.

## Description

### TECHNICAL FIELD

The present disclosure relates to an information processing method, an information processing program, an information processing device, and an information processing system.

### BACKGROUND ART

The development of an information communication technology has been remarkable in recent years, and not only personal computers, smartphones, and tablets, but also all things such as automobiles, home appliances, and sensor devices are connected to communication networks such as the Internet. In this way, it is expected that an internet of things (IoT) society in which trillions of devices on the earth are connected to the communication networks will arrive in the near future (refer to Patent Literature 1).

### CITATION LIST

### PATENT LITERATURE

Patent Literature 1: JP 2016-515328 A

### SUMMARY OF INVENTION

### TECHNICAL PROBLEM

However, as disclosed in Patent Literature 1, in the current IoT technology, an internet service provider (ISP) manages network addresses (typically, IP addresses) of devices which are connected to the Internet. For example, in a case where a predetermined device is connected to the Internet, the ISP allocates an IP address (particularly, a global IP address) to the predetermined device. Then, the predetermined device can access a WEB server on the Internet by using the IP address allocated by the ISP. In this manner, in a case where a device is connected to a communication network such as the Internet, intervention of a business operator who manages the IP address such as the ISP is required.

On the other hand, in order to improve user convenience for connection to communication networks, currently, a technology in which a device can issue an IP address of the device itself without through the ISP who manages the global IP address or a DHCP server that manages a private IP address has been developed. Examples of such IP addresses include EVER/IP (registered trademark). According to the technology, a device A having a communication function can issue an IP address of the device A itself on the basis of a public key authenticated by an authentication station without through the ISP or the like. In addition, a device B having a communication function can issue an IP address of the device B itself on the basis of a public key authenticated by the authentication station without through the ISP or the like. Further, when any one of the device A and the device B can know the IP address of the other side, communication is established between the device A and the device B. In this manner, in order for the device A and the device B to be connected in a communicable manner, it is necessary for at least one of the device A and the device B to grasp the IP address of the other side in advance.

In this regard, it is considered that a user of the device A grasps the IP address of the device B, and manually inputs the IP address of the device B to the device A. However, the work of manually inputting the IP address of the device B to the device A after grasping the IP address of the device B is very time-consuming work. From the above-described viewpoint, there is room for further improving user convenience.

An object of the disclosure is to provide an information processing method, an information processing program, an information processing device, and an information processing system which are capable of improving user convenience in communication connection between devices.

### SOLUTION TO PROBLEM

An information processing method according to an aspect of the disclosure includes:
a step of generating a two-dimensional pattern associated with a network address of a first device;
a step of causing a display unit of the first device to display the two-dimensional pattern;
a step of acquiring image data representing the two-dimensional pattern from an imaging unit of a second device; and
a step of specifying the network address based on the acquired image data.

According to the above-described method, the network address of the first device is automatically specified by the second device from the image data representing the two-dimensional pattern displayed on the display unit of the first device. In this manner, it is not necessary to conduct work such as manual inputting of the network address of the first device to the second device after grasping the network address of the first device, and thus it is possible to provide an information processing method capable of improving user convenience in communication connection between the first device and the second device.

In addition, the above-described information processing method may further include: a step of transmitting predetermined information to the first device by using the network address.

According to the above-described method, communication connection between the first device and the second device can be established by using the network address of the first device.

In addition, the above-described information processing method may further include:
a step of transmitting image data representing a display screen of the second device to the first device by using the network address; and
a step of causing the display unit of the first device to display the display screen of the second device on the basis of the transmitted image data representing the display screen of the second device.

According to the above-described method, it is possible to cause the display unit of the first device to display the display screen of the second device. In this manner, for example, the display screen of the second device can be shared by a plurality of persons through the display unit of the first device.

In addition, the above-described information processing method may further include:
a step of receiving image data representing a display screen of a third device that is connected to the second device in a communicable manner, from the third device;
a step of transmitting the image data representing the display screen of the third device to the first device by using the network address; and
a step of causing the display unit of the first device to display the display screen of the third device based on the transmitted image data representing the display screen of the third device.

According to the above-described method, the image data representing the display screen of the third device connected to the second device in a communicable manner is transmitted to the first device through the second device. In this manner, it is possible to cause the display unit of the first device to display the display screen of the third device that is not directly connected to the first device.

In addition, the above-described information processing method may further include:
a step of determining whether or not the second device exists in vicinity of the first device; and
a step of permitting communication connection between the first device and the second device in a case where the second device exists in the vicinity of the first device.

According to the above-described method, in a case where the second device exists in the vicinity of the first device, communication connection between the first device and the second device is permitted. In this manner, a situation in which communication connection between the first device and an external device existing at a location spaced apart from the first device is established may be appropriately prevented.

In addition, the step of determining whether or not the second device exists in the vicinity of the first device may include
a step of determining that the second device exists in the vicinity of the first device in response to a user input operation on the first device.

According to the above-described method, it is determined that the second device exists in the vicinity of the first device in correspondence with the user input operation on the first device. In this manner, it is possible to determine whether or not the second device exists in the vicinity of the first device by a relatively simple method.

In addition, the step of determining whether or not the second device exists in the vicinity of the first device may include
a step of determining that near field communication between the first device and the second device is established.

According to the above-described method, it is determined that the second device exists in the vicinity of the first device in correspondence with establishment of near field communication (NFC) between the first device and the second device. In this manner, it is possible to determine whether or not the second device exists in the vicinity of the first device by a relatively simple method.

In addition, the step of determining whether or not the second device exists in the vicinity of the first device may include:
a step of causing the display unit of the first device to display predetermined display information;
a step of acquiring user input information by the second device through a user input operation on the second device;
a step of transmitting the user input information from the second device to the first device; and
a step of determining whether or not the second device exists in the vicinity of the first device based on comparison between the transmitted user input information and the predetermined display information.

According to the above-described method, the user input information is acquired by the second device through the user input operation on the second device. Then, it is determined whether or not the second device exists in the vicinity of the first device on the basis of comparison between the user input information and the predetermined display information. In this manner, it is possible to determine whether or not the second device exists in the vicinity of the first device by using the predetermined display information displayed on the display unit of the first device.

In addition, the predetermined display information may be a one-time password.

According to the above-described method, it is possible to reliably determine whether or not the second device exists in the vicinity of the first device by using the one-time password displayed on the display unit of the first device.

In addition, the information processing method may further include a step of receiving configuration information of the second device.

In addition, the two-dimensional pattern may be a one-dimensional or two-dimensional bar code.

In addition, the two-dimensional pattern may include a plurality of divided regions. Each of the plurality of divided regions may have color information associated with a part of the network address.

The first device may be a projector.

An information processing method according to another aspect of the disclosure that is executed by a processor of a device including a display unit, includes:
a step of generating a two-dimensional pattern associated with a network address of the device; and
a step of causing the display unit to display the two-dimensional pattern.

According to the above-described method, it is possible to provide an information processing method capable of improving user convenience in communication connection between devices.

In addition, the above-described information processing method may further include: a step of generating the network address of the device by the processor of the device before the step of generating the two-dimensional pattern.

In addition, an information processing program causing a computer to execute the information processing method is provided. Further, a computer-readable storage medium storing the information processing program is provided.

An information processing device according to still another aspect of the disclosure includes: at least one processor; a memory that stores a computer-readable command; and a display unit. When the computer-readable command is executed by the processor, the information processing device is configured to execute the information processing method.

According to the above-described configuration, it is possible to provide an information processing device capable of improving user convenience in communication connection between devices.

An information processing system according to still another aspect of the disclosure includes: a first device including a display unit; and a second device including an imaging unit.

The first device
generates a two-dimensional pattern associated with a network address of the first device, and
causes the display unit to display the two-dimensional pattern.

The second device
acquires image data representing the two-dimensional pattern from the imaging unit, and
acquires the network address based on the acquired image data.

According to the above-described configuration, it is possible to provide an information processing system capable of improving user convenience in communication connection between the first device and the second device.

### EFFECT OF INVENTION

According to the disclosure, it is possible to provide an information processing method, an information processing program, an information processing device, and an information processing system which are capable of improving user convenience in communication connection between devices.

### BRIEF DESCRIPTION OF DRAWINGS

[FIG. 1] Fig. 1 is a view illustrating an information processing system including a first device and a second device.
[FIG. 2] Fig. 2 is a view illustrating an example of a hardware configuration of the first device.
[FIG. 3] Fig. 3 is a view illustrating an example of a hardware configuration of the second device.
[FIG. 4] Fig. 4 is a sequence diagram for describing an information processing method of an embodiment of the present invention (hereinafter, simply referred to as "this embodiment").
[FIG. 5] Fig. 5 is a view illustrating an example of a two-dimensional bar code displayed on a display unit of the first device.
[FIG. 6] Fig. 6 is a view illustrating an example of a two-dimensional color pattern displayed on the display unit of the first device.
[FIG. 7] Fig. 7 is a flowchart for describing an example of a step of determining whether or not the second device exists in the vicinity of the first device.
[FIG. 8] Fig. 8 is a view illustrating an example of a one-time password displayed on the display unit of the first device.
[FIG. 9] Fig. 9 is a view for describing a state in which data is transmitted from the second device to the first device through a communication network.
[FIG. 10] Fig. 10 is a view illustrating an example of a display screen of the second device displayed on the display unit of the first device.
[FIG. 11] Fig. 11 is a view illustrating an information processing system including the first device and two second devices.
[FIG. 12] Fig. 12 is a view illustrating an example of a display screen of a plurality of the second devices displayed on the display unit of the first device.
[FIG. 13] Fig. 13 is a view illustrating an information processing system including the first device, the second device, and a third device.
[FIG. 14] Fig. 14 is a view illustrating an example of a display screen of the third device displayed on the display unit of the first device.

### DESCRIPTION OF EMBODIMENTS

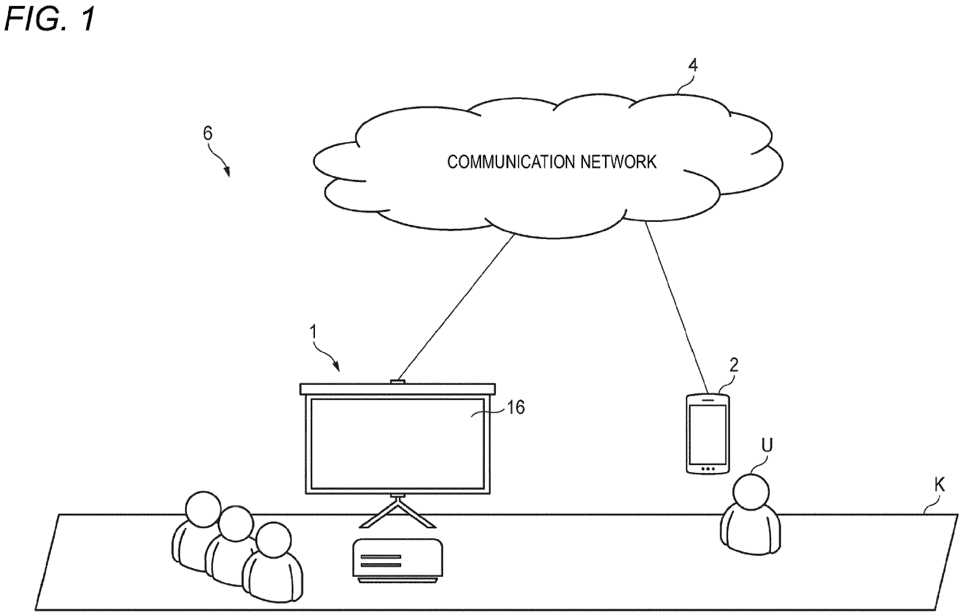

Hereinafter, an embodiment will be described with reference to the accompanying drawings. First, an information processing system 6 according to the embodiment of the invention (hereinafter, simply referred to as "this embodiment") will be described with reference to Fig. 1. As illustrated in Fig. 1, the information processing system 6 includes a first device 1 provided with a display unit 16, and a second device 2. The first device 1 and the second device 2 are configured to be connected to a communication network 4. The communication network 4 is an IP network, and includes at least one among a local area network (LAN), a wide area network (WAN), a radio access network (RAN), and the Internet. The first device 1 and the second device 2 may be connected to the communication network 4 through an access point such as a radio LAN router and a radio base station. In addition, the first device 1 and the second device 2 may be connected to a router by a wired cable.

In addition, it is assumed that a user U who carries the second device 2 and another user who is viewing the display unit 16 of the first device 1 exist in a closed space K (for example, a conference room or the like).

The kind of the first device 1 is not particularly limited, and all members which are connected to the communication network 4 by using a network address and are provided with a display unit, a processor, a memory, and a network interface become a target. For example, the first device 1 may be a personal computer, a smartphone, a tablet, or a projector. Further, the first device 1 may be a smart home appliance (for example, a smart television), a car navigation system that is mounted on a vehicle, or an office device (for example, a printer or a multifunction device).

Similarly, the kind of the second device 2 is not particularly limited, and all members which are connected to a communication network by using a network address and are provided with a processor, a memory, an imaging unit such as a camera, and a network interface become a target. For example, the second device 2 may be a personal computer, a smartphone, a tablet, or a wearable device (for example, a smart watch, an AR glass, or the like) worn on a user's body (for example, the arms, the head, or the like).

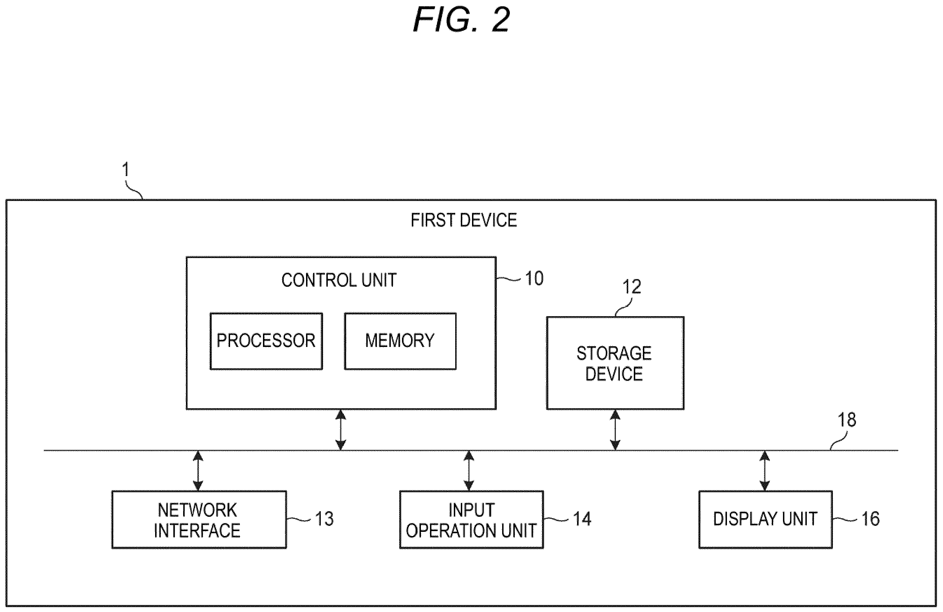

Next, a hardware configuration of the first device 1 (an example of the information processing device) will be described below with reference to Fig. 2. Fig. 2 is a view illustrating an example of the hardware configuration of the first device 1. As illustrated in Fig. 1, the first device 1 includes a control unit 10, a storage device 12, a network interface 13, a display unit 16, and an input operation unit 14. These components are connected to each other in a communicable manner through a bus 18.

The control unit 10 is configured to control an operation of the first device 1, and includes a memory and a processor. The memory is configured to store a computer-readable command (for example, an information processing program). For example, the memory may be constituted by a read only memory (ROM) that stores various programs or the like, a random access memory (RAM) including a plurality work areas which store various programs or the like executed by a processor, and the like. In addition, the memory may be constituted by a flash memory or the like. For example, the processor includes at least one among a CPU, a micro processing unit (MPU), and a graphics processing unit (GPU). The CPU may be constituted by a plurality of CPU cores. The GPU may be constituted by a plurality of GPU cores. The processor may be configured to develop a program designated from various kinds of programs stored in the storage device 12 or the ROM onto the RAM, and to execute various kinds of processes in cooperation with the RAM Particularly, when the processor executes an information processing program incorporated in the memory, the first device 1 is configured to execute the information processing method according to this embodiment.

For example, the storage device 12 is a storage device (storage) such as a hard disk drive (HDD), a solid state drive (SSD), and a flash memory, and is configured to store programs or various pieces of data. The information processing program according to this embodiment which is transmitted from a server on the Internet may be stored in the storage device 12.

The network interface 13 is configured to connect the first device 1 to the communication network 4. Specifically, the network interface 13 may include various kinds of wired connection terminals for establishing communication with an external device such as a server through the communication network 4. In addition, the network interface 13 may include various kinds of processing circuits, antennas, and the like for establishing communication with a radio router or a radio base station. For example, the standard of radio communication is Wi-Fi (registered trademark), Bluetooth (registered trademark), ZigBee (registered trademark), LPWA, or a fifth generation mobile communication system (5G).

The display unit 16 may be a display device such as a liquid crystal display, and an organic EL display. In addition, in a case where the first device 1 is a projector, the display unit 16 includes a screen, and an image projection unit configured to project an image (light) onto the screen.

The input operation unit 14 is configured to receive an input operation of a user who operates the first device 1, and to generate an instruction signal corresponding to the input operation. Examples of the input operation unit 14 include a touch panel that is disposed to be superimposed on the display unit 26, an operation button formed in a housing, and a mouse and/or a keyboard. After an instruction signal generated by the input operation unit 14 is transmitted to the control unit 10 through the bus 18, the control unit 10 executes a predetermined operation in correspondence with the instruction signal. The display unit 16 and the input operation unit 14 may be connected to the first device 1 through an input/output interface such as a USB.

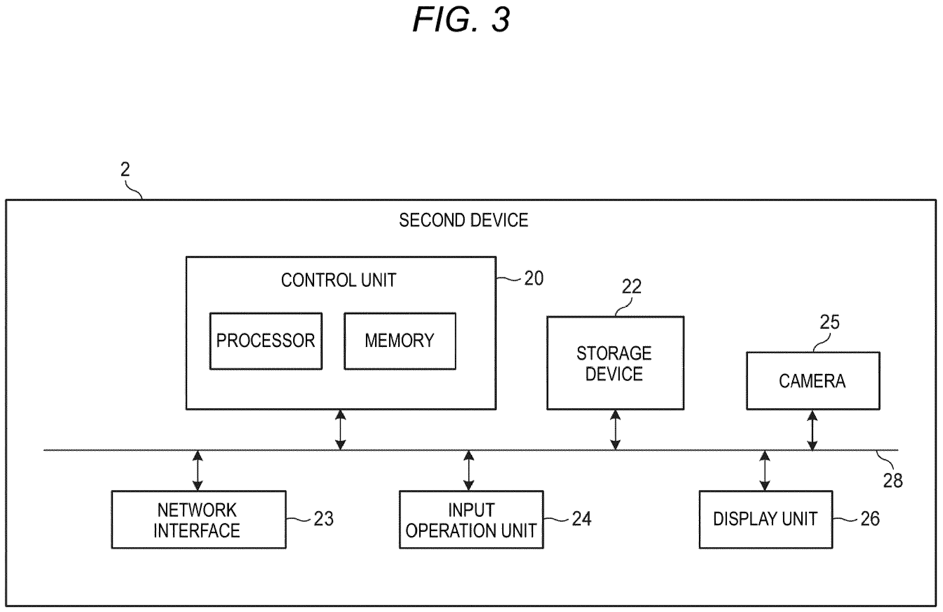

Next, a hardware configuration of the second device 2 will be described below with reference to Fig. 3. Fig. 3 is a view illustrating an example of the hardware configuration of the second device 2. As illustrated in Fig. 3, the second device 2 includes a control unit 20, a storage device 22, a camera 25 (an example of an imaging unit), a network interface 23, a display unit 26, and an input operation unit 24. These components are connected to each other in a communicable manner through a bus 28.

The control unit 20 is configured to control an operation of the second device 2, and includes a memory and a processor. The memory is configured to store a computer-readable command. For example, the memory includes a ROM and a RAM For example, the processor includes at least one among a CPU, an MPU, and a GPU. The processor may be configured to develop a program designated from various kinds of programs incorporated in the storage device 22 or the ROM onto the RAM, and to execute various kinds of processes in cooperation with the RAM

For example, the storage device 22 is a storage device (storage) such as an HDD, an SSD, and a flash memory, and is configured to store a program or various pieces of data. The network interface 23 is configured to connect the second device 2 to the communication network 4. Specifically, the network interface 23 may include various kinds of wired connection terminals for establishing communication with an external device such as a server through the communication network 4. In addition, the network interface 23 may include various kinds of processing circuits, antennas, and the like for establishing communication with a radio router or a radio base station. An example of the standard of the radio communication is similar to the above-described standard.

The display unit 26 may be a display device such as a liquid crystal display and an organic EL display, or may be a head-mounted display mounted on the head of the user U. The input operation unit 24 is configured to receive an input operation of a user who operates the second device 2, and to generate an instruction signal corresponding to the input operation. Examples of the input operation unit 24 include a touch panel that is disposed to be superimposed on the display unit 26, an operation button formed in a housing, and a mouse and/or a keyboard.

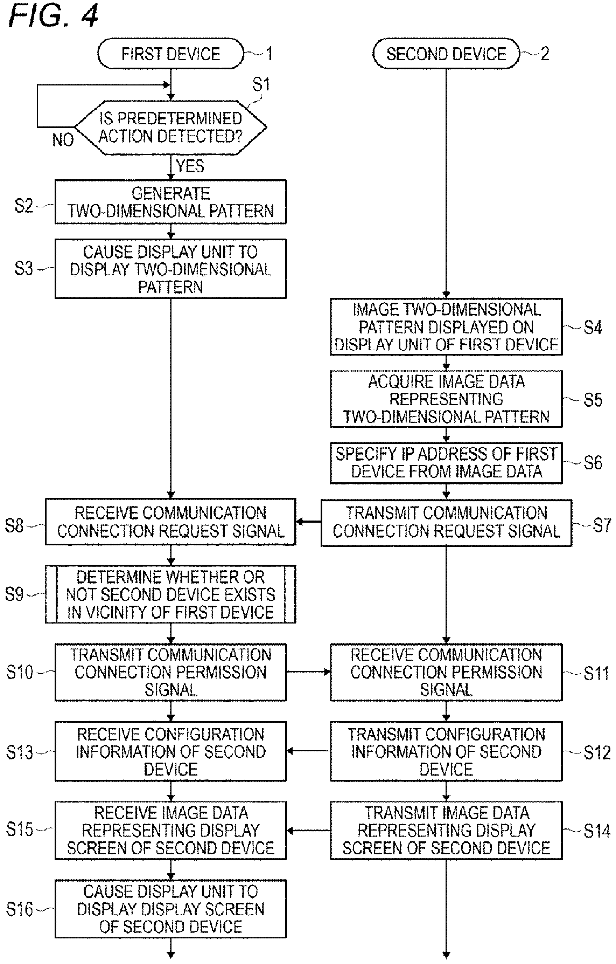

Next, the information processing method according to this embodiment will be described below with reference to Fig. 4. Fig. 4 is a sequence diagram for describing the information processing method of this embodiment. As illustrated in Fig. 4, in step S1, the control unit 10 of the first device 1 determines whether or not a predetermined action of the user U on the first device 1 is detected. Here, the predetermined action is an action that becomes a trigger of generation and display of a two-dimensional pattern. An example of the predetermined action includes an action of pressing an operation button (particularly, an operation button displayed on the display unit 16) of the first device 1. In a case where a determination result in step S1 is YES, this process proceeds to step S2. On the other hand, in a case where the determination result in step S2 is NO, a determination process in step S1 is executed again.

Next, the control unit 10 generates a two-dimensional pattern associated with an IP address (for example, global IP address) of the first device 1 (step S2). Then, the control unit 10 causes the display unit 16 to display the generated two-dimensional pattern (step S3).

For example, the IP address of the first device 1 is an IP address (128 bits) corresponding to IPv6 displayed in 32 digits of a hexadecimal digit. The IP address may be generated on the basis of a public key of the first device 1 authenticated by an authentication station. Specifically, after generating a secret key (512 bits) of the first device 1 and a public key (256 bits) corresponding to the secret key, the control unit 10 generates a hash value (256 bits) on the basis of the public key and a predetermined hash function. In a case where the generated hash value satisfies a predetermined condition, the control unit 10 generates an IP address of the first device 1 on the basis of the hash value. Then, the first device 1 acquires a digital certificate associated with the public key from the authentication station. In this manner, since the public key of the first device 1 is authenticated by the authentication station, the IP address generated on the basis of the public key is also indirectly authenticated by the authentication station. In this embodiment, it is assumed that the IP address (128 bits) of the first device 1 is generated already. On the other hand, after the determination as detection of the predetermined action in step S1, the control unit 10 may generate the IP address of the first device 1.

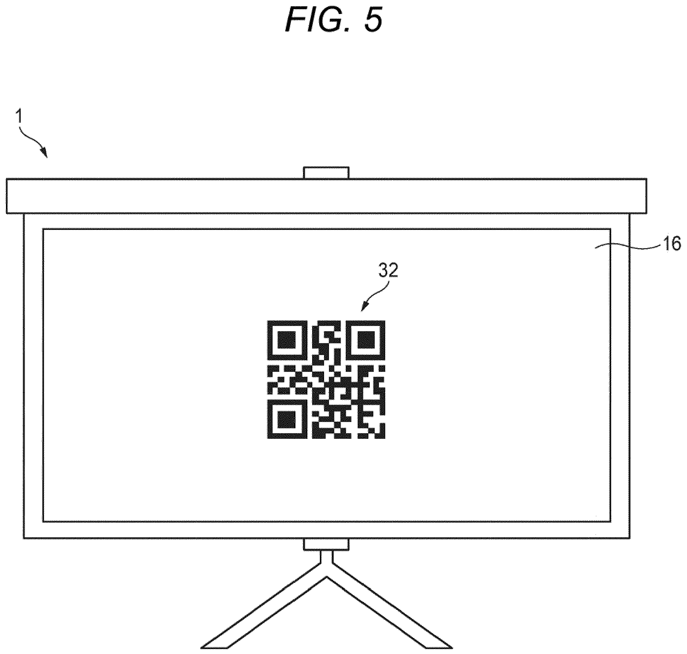

In addition, the generated two-dimensional pattern includes at least information (128-bit information) relating to the IP address of the first device 1. In addition, the two-dimensional pattern may include information relating to the first device 1 other than the IP address. The two-dimensional pattern may be a one-dimensional bar code or a two-dimensional bar code (QR code (registered trademark)). For example, as illustrated in Fig. 5, a QR code 32 including information of the IP address of the first device 1 may be displayed on the display unit 16. In this case, the QR code 32 include the amount of information of 128 bits or greater.

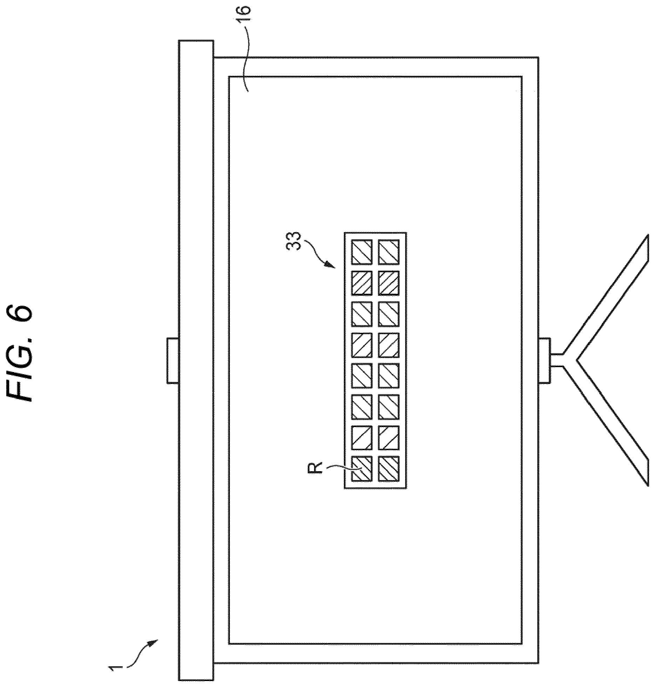

In addition, as illustrated in Fig. 6, the two-dimensional pattern may be a two-dimensional color pattern 33. The two-dimensional color pattern 33 includes a plurality of divided regions R (in this example, 16 divided regions R). Each of the plurality of divided regions R has color information associated with a part of the IP address of the first device 1. For example, in a case where the IP address has the amount of information of 128 bits, each of the 16 divided regions R may have 8-bit color information (256 colors). Information relating to the 128-bit IP address may be constituted by the color information (8 bits) of the 16 divided regions R (8 bits × 16 = 128 bits). Further, in a case where the two-dimensional color pattern 33 includes information relating to the first device 1 other than the IP address, the number of the divided regions R may be 17 or greater.

Returning to Fig. 4, in step S4, the user U images the two-dimensional pattern displayed on the display unit 16 of the first device 1 by using the camera 25 of the second device 2. Then, the control unit 20 of the second device 2 acquires image data representing the two-dimensional pattern from the camera 25 (step S5). Next, in step S6, the control unit 20 specifies the IP address of the first device 1 on the basis of the acquired image data. In this regard, in a case where the two-dimensional pattern is the QR code 32 (refer to Fig. 5), the control unit 20 analyzes image data representing the QR code 32 to acquire information (128 bits) relating to the IP address included in the QR code 32. In addition, in a case where the two-dimensional pattern is the two-dimensional color pattern 33 (refer to Fig. 6), the control unit 20 analyzes image data representing the two-dimensional color pattern 33 to acquire information relating to the IP address included in the two-dimensional color pattern 33. In this case, the control unit 20 may specify 8-bit data corresponding to color information of each of the divided regions R with reference to a table in which color information of 256 colors and 8-bit data are associated with each other after specifying color information (for example, red, blue, yellow, or the like) of each of the divided regions R of the two-dimensional color pattern 33.

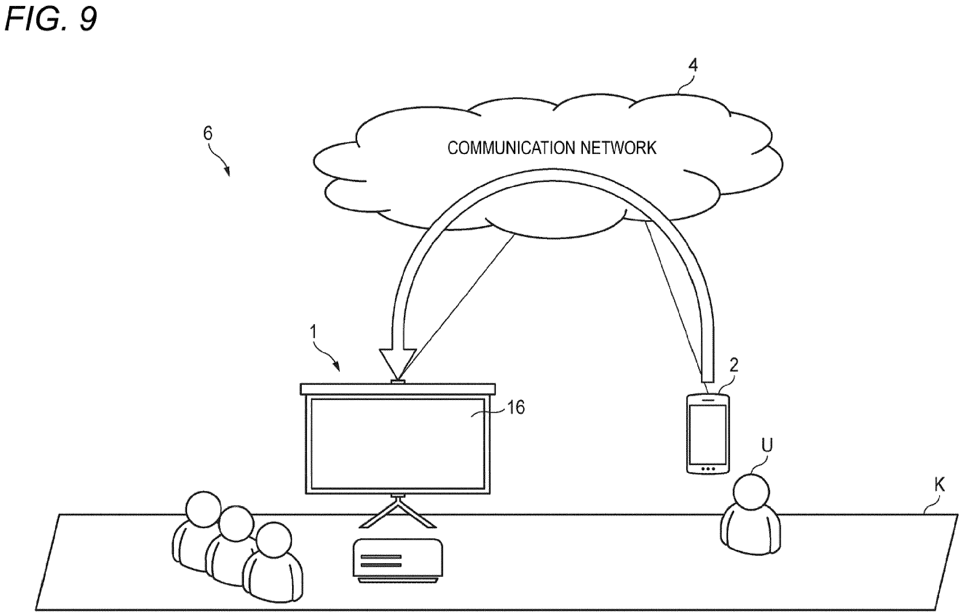

Next, the control unit 20 transmits a signal (communication connection request signal) for making a request for communication connection with the first device 1 to the second device 2 through the communication network 4 (refer to Fig. 9) (step S7). Here, the communication connection request signal (IP packet) includes the IP address of the first device 1 as a transmission destination, and an IP address of the second device 2 as a transmission source. Note that, the IP address of the second device 2 may also be an IP address (128 bits) corresponding to IPv6 displayed in 32 digits of a hexadecimal digit. Further, the IP address of the second device 2 may be generated on the basis of a public key of the second device 2 authenticated by an authentication station.

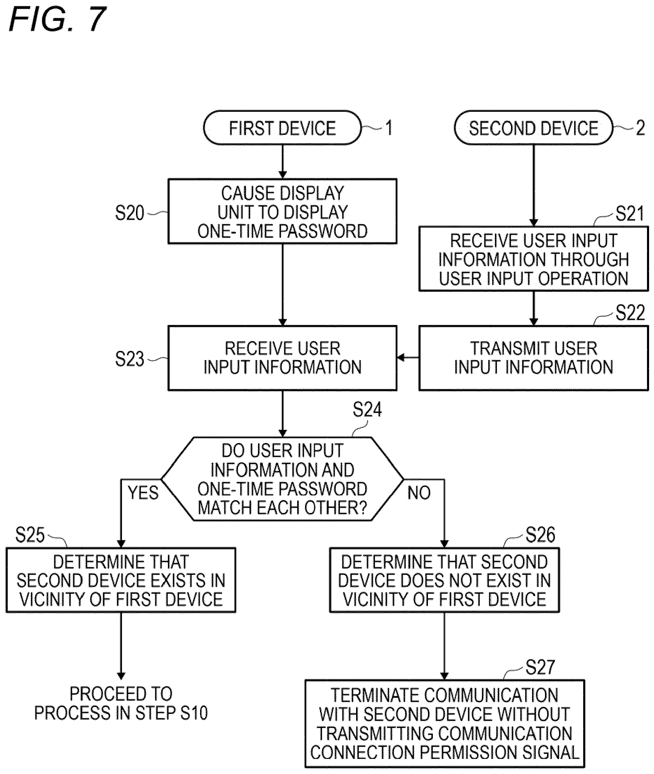

Then, after receiving the communication connection request signal from the second device 2 (step S8), the control unit 20 of the first device 1 executes a process of determining whether or not the second device 2 exists in the vicinity of the first device 1 (step S9). An example of the determination process in step S9 will be described below with reference to Fig. 7. Fig. 7 is a flowchart for describing an example of a process of determining whether or not the second device 2 exists in the vicinity of the first device 1.

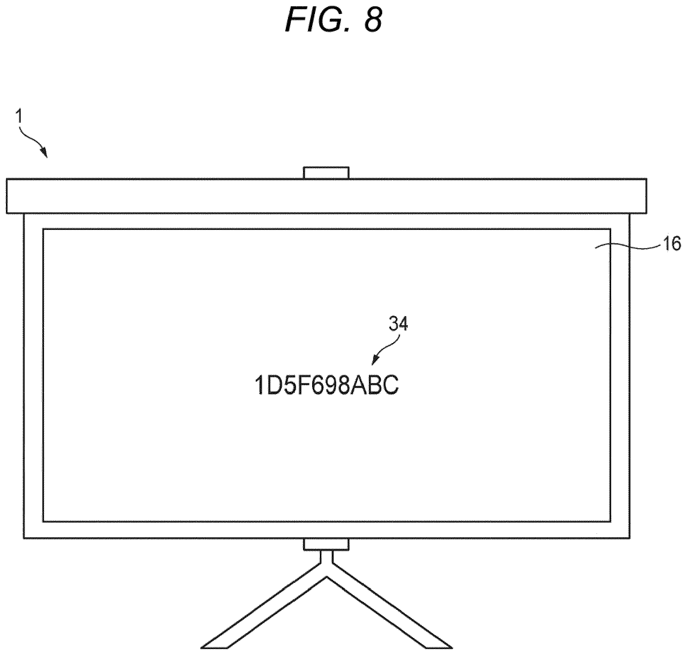

As illustrated in Fig. 7, in step S20, the control unit 10 of the first device 1 causes the display unit 16 to display one-time password (an example of predetermined display information). Here, as illustrated in Fig. 8, it is assumed that a one-time password 34 having predetermined digits is displayed on the display unit 16. Next, in step S21, the control unit 20 of the second device 2 receives user input information through an input operation of the user U. In this regard, the user U tries to input the user input information (" 1D5F698ABC") corresponding to the one-time password 34 to the second device 2. Next, the control unit 20 transmits an IP packet including the user input information to the first device 1 through the communication network 4 (step S22). Then, after receiving the user input information in step S23, the control unit 10 of the first device 1 compares the user input information transmitted from the second device 2 and the one-time password 34 with each other to determine whether or not the user input information and the one-time password 34 match each other (step S24). In a case where it is determined that the user input information and the one-time password 34 match each other (YES in step S24), the control unit 10 determines that the second device 2 exists in the vicinity of the first device 1 (step S25). Then, in step S10 in Fig. 4, the control unit 10 transmits a signal (communication connection permission signal) representing that communication connection with the second device 2 is permitted to the second device 2 through the communication network 4. On the other hand, in a case where it is determined that the user input information and the one-time password 34 do not match each other (NO in step S24), the control unit 10 determines that the second device 2 does not exist in the vicinity of the first device 1 (step S26). Then, the control unit 10 terminates communication with the second device 2 without transmitting the communication connection permission signal to the second device 2 (step S27). In this case, the control unit 10 may cause the display unit 16 to display a message indicating that communication with the second device 2 is terminated.

Note that, in step S23, when not receiving the user input information in a predetermined period (for example, in 60 seconds) after the one-time password 34 is displayed on the display unit 16, the control unit 10 may execute the process in step S27. Further, in a case where the determination result in step S24 is NO, the control unit 10 may cause the display unit 16 to display a content representing that the user input information and the one-time password 34 do not match each other, and may cause the display unit 16 to display a new one-time password (step S20). In this case, in a case where the determination result in step S24 becomes NO again, the control unit 10 may execute processes in steps S26 and S27.

In addition, as a second example of the determination process in step S9, the control unit 10 of the first device 1 may determine that the second device 2 exists in the vicinity of the first device 1 in correspondence with an input operation of the user U on the first device 1. Specifically, the control unit 10 causes the display unit 16 to display a message promoting pressing of a predetermined operation button of the first device 1. Then, in a case where the predetermined operation button is pressed in a predetermined period (for example, in 30 seconds), the control unit 10 may determine that the second device 2 exists in the vicinity of the first device 1. According to the second example, it is possible to determine whether or not the second device 2 exists in the vicinity of the first device 1 by a relatively simple method.

Further, as a third example of the determination process in step S9, the control unit 10 of the first device 1 may determine that the second device 2 exists in the vicinity of the first device 1 in correspondence with establishment of near field communication (NFC) between the first device 1 and the second device 2. Specifically, the control unit 10 causes the display unit 16 to display a message promoting touching on the second device 2 with an interface for NFC (hereinafter, referred to as "NFC interface") of the first device 1. Then, in the case of detecting a touch action of the second device 2 on the NFC interface of the first device 1 in a predetermined period (for example, in 30 seconds), the control unit 10 may determine that the second device 2 exists in the vicinity of the first device 1. According to the third example, it is possible to determine whether or not the second device 2 exists in the vicinity of the first device 1 by a relatively simple method.

Next, returning to Fig. 4, after receiving the communication connection permission signal from the first device 1 (step S11), the control unit 20 of the second device 2 transmits configuration information (descriptor) of the second device 2 to the first device 1 (step S12). Then, in step S13, the first device 1 receives the configuration information of the second device 2. For example, the configuration information of the second device 2 may include information relating to a coding method of image data, or information relating to a display screen size. Note that, the control unit 20 may transmit the configuration information of the second device 2 to the first device 1 in correspondence with a signal (configuration information request signal) that makes a request for transmission of the configuration information transmitted from the first device 1.

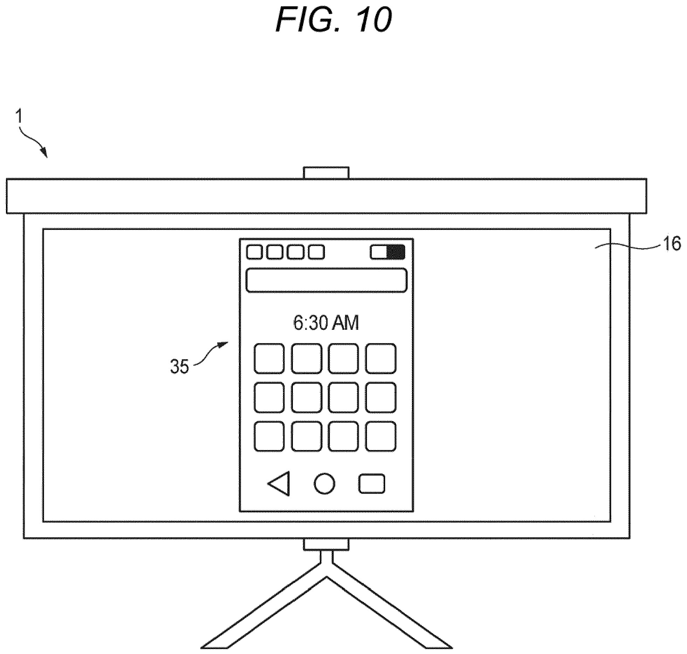

Next, in step S14, the control unit 20 of the second device 2 transmits image data that is stored in a memory and represents a display screen displayed on the display unit 26 of the second device 2 to the first device 1 through the communication network 4 (refer to Fig. 9). Then, after receiving the image data representing the display screen of the second device 2 from the first device 1 (step S15), the control unit 10 of the first device 1 causes the display unit 16 to display the display screen of the second device 2 on the basis of the image data representing the display screen of the second device 2 (step S16). For example, as illustrated in Fig. 10, a display screen 35 of the second device 2 is displayed on the display unit 16. In this manner, the process of an example illustrated in Fig. 4 is executed.

According to this embodiment, after the two-dimensional pattern displayed on the display unit 16 of the first device 1 is imaged by the camera 25, the IP address of the first device 1 is automatically specified by the second device 2 from the image data representing the two-dimensional pattern imaged by the camera 25. In this manner, after grasping the IP address of the first device 1, it is not necessary for the user U to perform time-consuming work such as manual inputting of the IP address of the first device 1 to the second device 2. In this manner, convenience of the user U in communication connection between the first device 1 and the second device 2 may be improved.

Further, after the IP address of the first device 1 is automatically specified by the second device 2 from the image data imaged by the camera 25, the display screen 35 (refer to Fig. 10) of the second device 2 may be displayed on the display unit 16 of the first device 1 by using an IP address specified when a predetermined application is activated. In this manner, the display screen 35 of the second device 2 may be shared by a plurality of persons through the display unit 16 in a closed space K as illustrated in Fig. 1. For example, a presentation may be given to a plurality of persons by using the display screen 35 displayed on the display unit 16. In this regard, in a case where a conference material (for example, a presentation material) stored in the second device 2 is displayed on the display unit 26 of the second device 2, the conference material may be displayed on the display unit 16 as the display screen 35 of the second device 2.

In addition, in this embodiment, in a case where the second device 2 exists in the vicinity of the first device 1, communication connection between the first device 1 and the second device 2 is permitted. In this manner, a situation in which communication connection between the first device 1 and an external device existing at a location spaced apart from the first device 1 (particularly, not existing in the closed space K) is established may be appropriately prevented. In this regard, it is possible to determine whether or not the second device 2 exists in the vicinity of the first device 1 (particularly, whether or not the second device 2 exists in the space K) by using the one-time password 34 (refer to Fig. 8) displayed on the display unit 16 of the first device 1.

Note that, in a series of processes illustrated in Fig. 4, a process of authenticating the IP address of the first device 1 may be executed after the process in step S6. In this case, the control unit 20 of the second device 2 may transmit the communication connection request signal to the first device 1 after authenticating the IP address of the first device 1. In addition, in order to ensure secure communication between the first device 1 and the second device 2, before the process in step S14 is executed, the first device 1 may transmit an authenticated public key of the first device 1 and a digital certificate of the public key to the second device 2. Similarly, the second device 2 may transmit an authenticated public key of the second device 2 and a digital certificate of the public key to the second device 2. In this manner, the second device 2 may encrypt transmission data on the basis of the public key of the first device 1 and may transmit the encrypted transmission data to the first device 1. Similarly, after encrypting transmission data on the basis of the public key of the second device 2, the first device 1 may transmit the encrypted transmission data to the second device 2. In this manner, secure communication between the first device 1 and the second device 2 may be executed by using the public keys of the first device 1 and the second device 2.

### (First Modification Example)

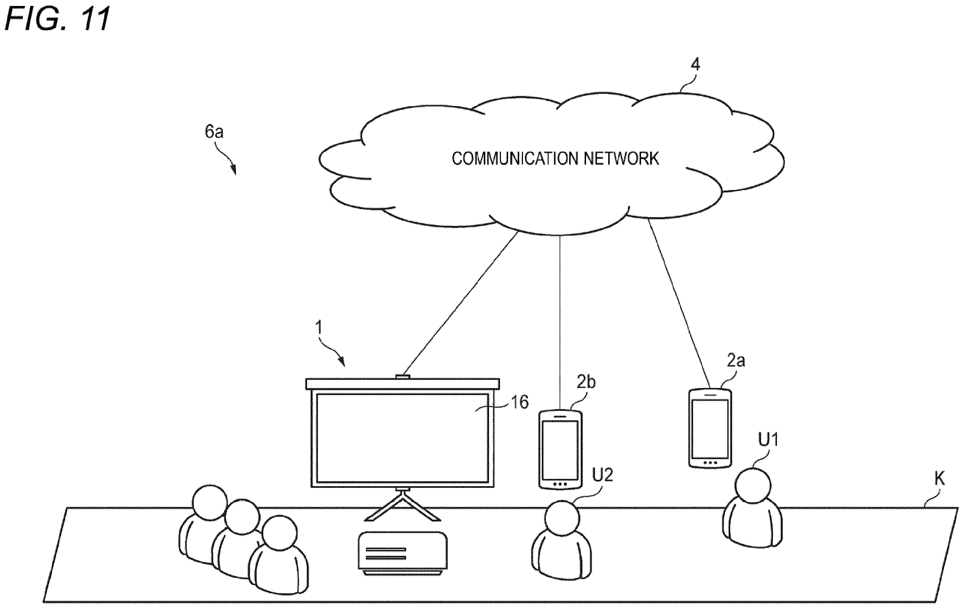

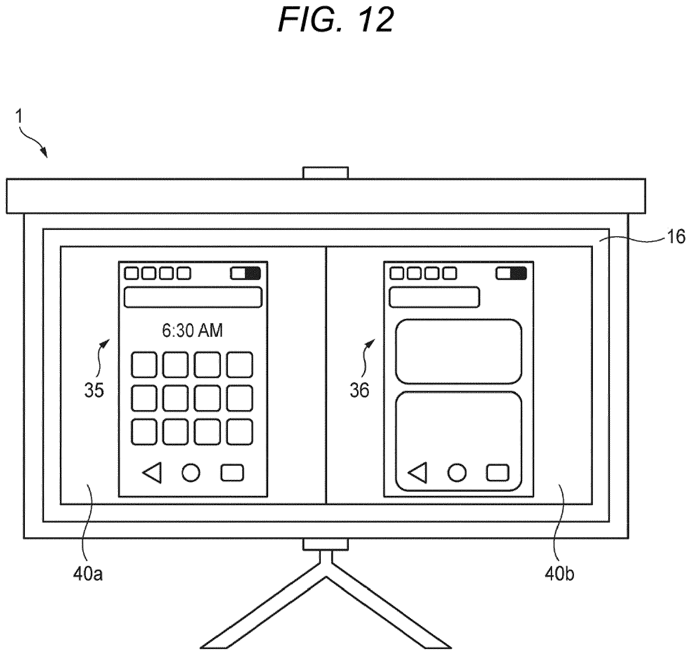

Next, an information processing system 6a according to a first modification example of this embodiment will be described with reference to Fig. 11 and Fig. 12. Fig. 11 is a view illustrating the information processing system 6a including the first device 1 and two second devices 2a and 2b. Fig. 12 is a view illustrating an example of a display screen 35 of the second device 2a and a display screen 36 of the second device 2b which are displayed on the display unit 16 of the first device 1. Note that, in this modification example, it is assumed that each of the second devices 2a and 2b has the same configuration as in the second device 2 described in this embodiment.

According to this modification example, after a two-dimensional pattern displayed on the display unit 16 of the first device 1 is imaged by a camera of the second device 2a, the IP address of the first device 1 is automatically specified by the second device 2a from image data representing the two-dimensional pattern imaged by the camera. Further, the second device 2a is connected to the first device 1 in a communicable manner by using the specified IP address. Accordingly, as illustrated in Fig. 12, the display screen 35 of the second device 2a may be displayed in a divided region 40a of the display unit 16. Similarly, after the two-dimensional pattern displayed on the display unit 16 of the first device 1 is imaged by a camera of the second device 2b, the IP address of the first device 1 is automatically specified by the second device 2b from image data representing the two-dimensional pattern imaged by the camera. Further, the second device 2b is connected to the first device 1 in a communicable manner by using the specified IP address. Accordingly, as illustrated in Fig. 12, the display screen 36 of the second device 2b may be displayed in a divided region 40b of the display unit 16.

In this manner, a plurality of persons may share the display screen 35 of the second device 2a and the display screen 36 of the second device 2b through the display unit 16 in the closed space K. In this manner, a user U1 who carries the second device 2a may give a presentation to a plurality of persons by using the display screen 35 displayed on the display unit 16. In addition, a user U2 who carries the second device 2b may give a presentation to a plurality of persons by using the display screen 36 displayed on the display unit 16.

Note that, the information processing system 6a may include three or more second devices. In this case, divided regions in a number corresponding to the number of the second devices may be set in the display unit 16 of the first device 1.

### (Second Modification Example)

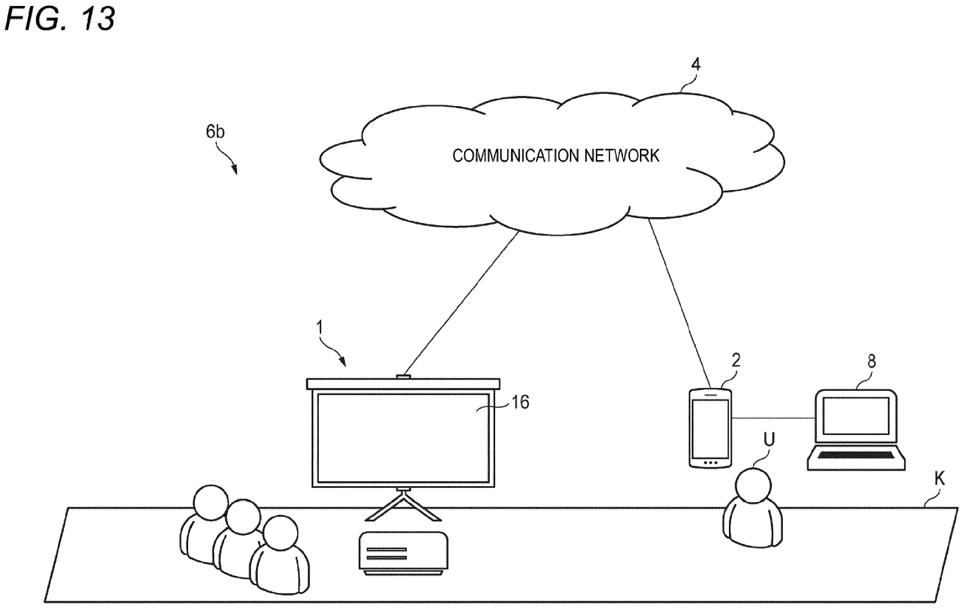

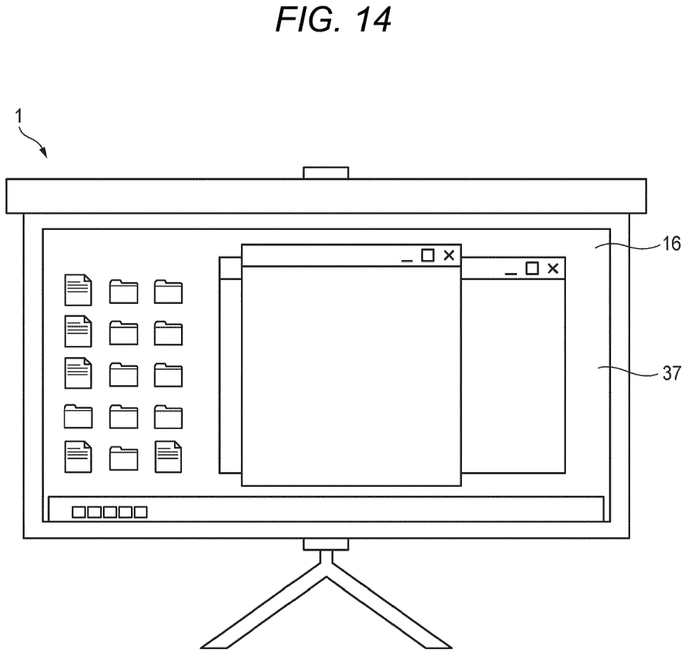

Next, an information processing system 6b according to a second modification example of this embodiment will be described with reference to Fig. 13 and Fig. 14. Fig. 13 is a view illustrating the information processing system 6b including the first device 1, the second device 2, and a third device 8. Fig. 14 is a view illustrating an example of a display screen 37 of the third device 8 displayed on the display unit 16 of the first device 1. Note that, in this modification example, it is assumed that a hardware configuration of the third device 8 is different from the hardware configuration of the second device 2 illustrated in Fig. 3 in that a camera is not provided. That is, it is assumed that the third device 8 cannot image the two-dimensional pattern displayed on the display unit 16. In addition, it is assumed that the third device 8 is connected to the second device 2 in a communicable manner and is not connected to the first device 1 in a communicable manner.

According to this modification example, after a two-dimensional pattern displayed on the display unit 16 of the first device 1 is imaged by the camera of the second device 2, an IP address of the first device 1 is automatically specified by the second device 2 from image data representing the two-dimensional pattern imaged by the camera. Further, the second device 2 is connected to the first device 1 in a communicable manner by using the specified IP address. In this manner, it is possible to cause the display unit 16 of the first device 1 to display the display screen of the second device 2. Further, as illustrated in Fig. 14, since the second device 2 is connected to the third device 8 in a communicable manner, it is possible to cause the display unit 16 to display the display screen 37 of the third device 8. In this regard, since the third device 8 is connected to the second device 2 in a communicable manner, image data representing the display screen 37 of the third device 8 is transmitted to the second device 2. Then, the second device 2 transmits the image data representing the display screen 37 to the first device 1 by using the IP address of the first device 1 through the communication network 4. Then, the first device 1 causes the display unit 16 to display the display screen 37 on the basis of the transmitted image data.

As described above, the display screen 37 of the third device 8 that is not directly connected to the first device 1 may be displayed on the display unit 16. In addition, the display screen 37 of the third device 8 may be shared by a plurality of persons through the display unit 16 in the closed space K. In this manner, a user U who carries the third device 8 may give a presentation to the plurality of persons by using the display screen 37 displayed on the display unit 16.

In addition, in order to realize the first device 1 according to this embodiment by software, an information processing program may be incorporated in the storage device 12 or the ROM in advance. Similarly, in order to realize the second device 2 according to this embodiment by software, the information processing program may be incorporated in the storage device 22 or the ROM in advance. In addition, the information processing program may be stored in a computer-readable storage medium such as a magnetic disk (for example, an HDD and a floppy disk), an optical disc (for example, a CD-ROM, a DVD-ROM, and a Blu-ray (registered trademark) disc), a magneto-optical disc (for example, an MO), and a flash memory (for example, an SD card, a USB memory, and an SSD). In this case, the information processing program stored in the computer-readable storage medium may be incorporated in the storage device. Further, after the information processing program incorporated in the storage device is loaded on the RAM, a process may execute the information processing program loaded on the RAM In this manner, the information processing method according to this embodiment is executed by the first device 1 (or the second device 2).

In addition, the information processing program may be downloaded from a server on a communication network such as the Internet through a network interface. Even in this case, similarly, the downloaded information processing program may be incorporated in the storage device.

While the embodiment of the invention has been described above, the technical scope of the invention should not be construed as being limited by description of this embodiment. This embodiment is illustrative only, and it should be understood by those skilled in the art that various modifications of the embodiment may be made within the scope of the invention described in the attached claims. The technical scope of the invention should be defined by the scope of the invention described in the attached claims and an equivalent range thereof.

In this embodiment, as an example of the network address of the first device 1 and the second device 2, the IP address that is a network address corresponding to an internet protocol has been described, but the network address is not limited to the IP address. For example, the network address of the first device 1 and the second device 2 may be a network address corresponding to a predetermined communication protocol other than the Internet protocol.

In addition, in this embodiment, the first device 1 and the second device 2 are connected to each other in a communicable manner through the communication network 4, but the first device 1 and the second device 2 may be connected to each other in a communicable manner without through the communication network 4. For example, the first device 1 and the second device 2 may be connected to each other in a communicable manner in an ad hoc mode, or may be connected to each other in a communicable manner through an access point that is not connected to the communication network.

### EXPLANATIONS OF LETTERS OR NUMERALS

- 1: FIRST DEVICE
- 2, 2a, 2b: SECOND DEVICE
- 4: COMMUNICATION NETWORK
- 6, 6a, 6b: INFORMATION PROCESSING SYSTEM
- 8: THIRD DEVICE
- 10: CONTROL UNIT
- 12: STORAGE DEVICE
- 13: NETWORK INTERFACE
- 14: INPUT OPERATION UNIT
- 16: DISPLAY UNIT
- 18: BUS
- 20: CONTROL UNIT
- 22: STORAGE DEVICE
- 23: NETWORK INTERFACE
- 24: INPUT OPERATION UNIT
- 25: CAMERA
- 26: DISPLAY UNIT
- 28: BUS
- 32: QR CODE
- 34: ONE-TIME PASSWORD
- 35, 36, 37: DISPLAY SCREEN
- 40a, 40b: DIVIDED REGION

## Claims

1. An information processing method comprising:
a step of generating a two-dimensional pattern associated with a network address of a first device;
a step of causing a display unit of the first device to display the two-dimensional pattern;
a step of acquiring image data representing the two-dimensional pattern from an imaging unit of a second device; and
a step of specifying the network address based on the acquired image data.

2. The information processing method according to claim 1, further comprising:
a step of transmitting predetermined information to the first device by using the network address.

3. The information processing method according to claim 1 or 2, further comprising:
a step of transmitting image data representing a display screen of the second device to the first device by using the network address; and
a step of causing the display unit of the first device to display the display screen of the second device based on the transmitted image data representing the display screen of the second device.

4. The information processing method according to claim 1 or 2, further comprising:
a step of receiving image data representing a display screen of a third device that is connected to the second device in a communicable manner, from the third device;
a step of transmitting the image data representing the display screen of the third device to the first device by using the network address; and
a step of causing the display unit of the first device to display the display screen of the third device based on the transmitted image data representing the display screen of the third device.

5. The information processing method according to any one of claims 1 to 4, further comprising:
a step of determining whether or not the second device exists in vicinity of the first device; and
a step of permitting communication connection between the first device and the second device in a case where the second device exists in the vicinity of the first device.

6. The information processing method according to claim 5,
wherein the step of determining whether or not the second device exists in the vicinity of the first device includes
a step of determining that the second device exists in the vicinity of the first device in response to a user input operation on the first device.

7. The information processing method according to claim 5,
wherein the step of determining whether or not the second device exists in the vicinity of the first device includes
a step of determining that near field communication between the first device and the second device is established.

8. The information processing method according to claim 5, wherein the step of determining whether or not the second device exists in the vicinity of the first device includes:
a step of causing the display unit of the first device to display predetermined display information;
a step of acquiring user input information by the second device through a user input operation on the second device;
a step of transmitting the user input information from the second device to the first device; and
a step of determining whether or not the second device exists in the vicinity of the first device based on comparison between the transmitted user input information and the predetermined display information.

9. The information processing method according to claim 8,
wherein the predetermined display information is a one-time password.

10. The information processing method according to any one of claims 1 to 9, further comprising:
a step of receiving configuration information of the second device.

11. The information processing method according to any one of claims 1 to 10,
wherein the two-dimensional pattern is a one-dimensional or two-dimensional bar code.

12. The information processing method according to any one of claims 1 to 11,
wherein the two-dimensional pattern includes a plurality of divided regions, and
each of the plurality of divided regions has color information associated with a part of the network address.

13. The information processing method according to any one of claims 1 to 12, wherein the first device is a projector.

14. An information processing method that is executed by a processor of a device including a display unit, comprising:
a step of generating a two-dimensional pattern associated with a network address of the device; and
a step of causing the display unit to display the two-dimensional pattern.

15. The information processing method according to claim 14, further comprising:
a step of generating the network address of the device by the processor of the device before the step of generating the two-dimensional pattern.

16. An information processing program causing a computer to execute the information processing method according to any one of claims 1 to 15.

17. A computer-readable storage medium storing the information processing program according to claim 16.

18. An information processing device comprising:
at least one processor;
a memory that stores a computer-readable command; and
a display unit,
wherein, when the computer-readable command is executed by the processor, the information processing device is configured to execute the information processing method according to claim 14.

19. An information processing system comprising:
a first device including a display unit; and
a second device including an imaging unit,
wherein the first device
generates a two-dimensional pattern associated with a network address of the first device, and
causes the display unit to display the two-dimensional pattern, and the second device
acquires image data representing the two-dimensional pattern from the imaging unit, and
acquires the network address based on the acquired image data.
